# EUROPEAN PATENT APPLICATION

(11) **EP 2 615 562 A1**
(43) Date of publication of application: **17.07.2013**
(21) Application number: 11833816.9
(22) Date of filing: 12.10.2011
(51) Int. Cl.: G06F 17/30

(54) **METHOD FOR GENERATING MAP PHONE BOOK, AS WELL AS ELECTRONIC MAP AND MOBILE TERMINAL**

(30) Priority: 18.10.2010 CN 201010510078
(71) Applicant: Huawei Device Co., Ltd., Longgang District Shenzhen Guangdong 518129 (CN)
(72) Inventor: WEI, Qiuyang, Shenzhen Guangdong 518129 (CN)
(74) Representative: Pfenning, Meinig & Partner GbR
(86) International application number: PCT/CN2011/080702
(87) International publication number: WO 2012/051910

(57) **Abstract**

Embodiments of the present invention disclose a method, an electronic map, and a mobile terminal for generating a map phone book. The method includes: obtaining location related information of a contact; matching the location related information with location information in an electronic map; if the matching succeeds, adding the contact information of the contact to the location in the electronic map; and generating a map phone book that includes the contact information of the contact. In the embodiments of the present invention, location related information of a contact is obtained and matched with location information in an electronic map; and a map phone book is generated. In this way, contact information can be visually embodied in the form of a map, which makes it convenient for a user to query for contact information in the form of a map.

## Description

This application claims priority to Chinese Patent Application No. 201010510078.X, filed with the Chinese Patent Office on October 18, 2010 and entitled "METHOD, ELECTRONIC MAP, AND MOBILE TERMINAL FOR GENERATING MAP PHONE BOOK", which is incorporated herein by reference in its entirety.

### FIELD OF THE INVENTION

The present invention relates to mobile communication technologies, and in particular, to a method, an electronic map, and a mobile terminal for generating a map phone book.

### BACKGROUND OF THE INVENTION

Currently, mobile terminals such as handsets become more and more popular and become essential communication tools in people's life and business activities. As the storage capacities of mobile terminals are increasing, the mobile terminals can store more and more information, for example, the contact information includes phone number, correspondence address, and Email address In addition, most of mobile terminals with the navigation function are configured with an electronic map, which makes it convenient for users to know their locations.

The contact information stored in a mobile terminal is a phone book, through which a user can easily obtain the phone numbers and correspondence addresses of contacts. In the prior art, the phone book is stored and displayed in the handset in the form of a menu, and the phone book information displayed to the user includes such contact information as names, phone numbers, and Email addresses of the contacts.

A global positioning system (GPS) navigation method is provided in the prior art. In the method, a specific location is determined by using a GPS satellite, and a specific driving route guide is given by using an electronic map. By using the prior art, the location of a contact can be known, but the location information cannot be associated with the contact phone book, nor can the phone book that includes the current location information of the contact be visually displayed to the user in the form of a map.

The prior art also provides a technical solution for determining a home location according to phone number information by analyzing the area code in an existing mobile phone number or the area code in a fixed phone number to determine the city to which the relevant phone number belongs. By using the prior art, the city where the contact is located can be known according to the phone number, but the location information of the contact cannot be visually displayed to the user in the form of a map.

In the process of implementing the present invention, the inventor discovers that providing the phone book information in the form of a menu cannot visually embody the location information of a contact.

### SUMMARY OF THE INVENTION

Embodiments of the present invention provide a method and a mobile terminal for generating a map phone book to solve the problem that providing phone book information in the form of a menu cannot visually embody location information of a contact.

In order to achieve the foregoing objective, the embodiments of the present invention employ the following technical solutions.

A method for generating a map phone book includes the following steps:
obtaining location related information of a contact;
matching the location related information with location information in an electronic map; and
if the matching succeeds, adding contact information of the contact to the location in the electronic map, and generating a map phone book that includes the contact information of the contact.

A mobile terminal includes an electronic map and further includes:
a location information obtaining unit, configured to obtain location related information of a contact;
a location matching unit, configured to match the location related information with location information in the electronic map; and
a map phone book generating unit, configured to add matched contact information of the contact to the location in the electronic map, and generate a map phone book that includes the contact information of the contact.

An electronic map includes a contact phone book and further includes:
a location information obtaining module, configured to obtain location related information of a contact from a contact record of the contact phone book;
a location matching module, configured to match the location related information with location information in the electronic map; and
a map phone book module, configured to add contact information in the matched contact record of the contact phone book to the location in the electronic map.

In the embodiments of the present invention, location related information of a contact is obtained and matched with location information in an electronic map; and a map phone book is generated. In this way, contact information can be visually embodied in the form of a map, which makes it convenient for a user to query for the contact information in the form of a map.

### BRIEF DESCRIPTION OF THE DRAWINGS

FIG. 1 is a flowchart of a method for generating a map phone book according to an embodiment of the present invention;

FIG. 2 is a schematic structural diagram of a mobile terminal including a map phone book according to an embodiment of the present invention; and

FIG. 3 is a schematic diagram of internal components of an electronic map according to an embodiment of the present invention.

### DETAILED DESCRIPTION OF THE EMBODIMENTS

The technical solutions of the embodiments of the present invention are hereinafter described clearly and completely with reference to the accompanying drawings in the embodiments of the present invention. Evidently, the described embodiments are only a part rather than all of the embodiments of the present invention. All other embodiments obtained by a person of ordinary skill in the art without creative efforts based on the embodiments of the present invention fall within the protection scope of the present invention.

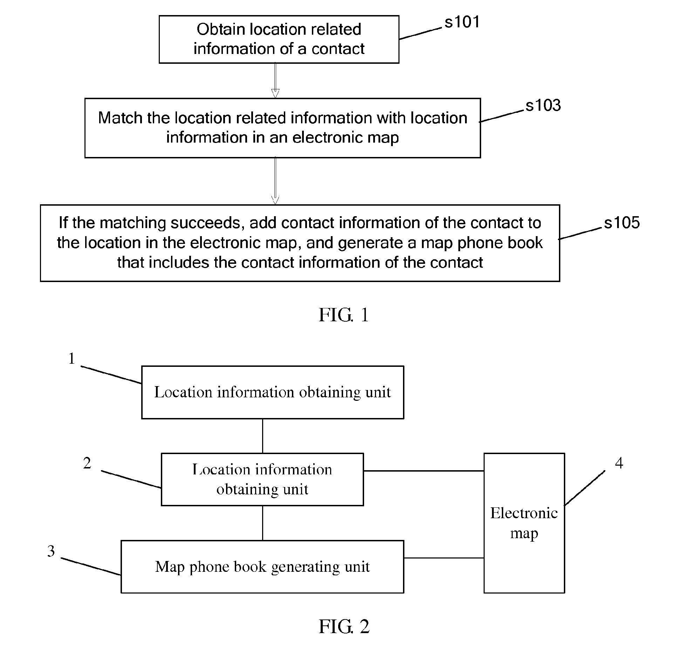

As shown in FIG. 1, an embodiment of the present invention provides a method for generating a map phone book. The method includes the following steps:

S 101. Obtain location related information of a contact.

Optionally, in this embodiment of the present invention, the current location information of a contact is obtained by using a location service, or the location information of a contact is obtained by extracting the correspondence address of the contact, or the home location information of a contact is obtained by analyzing the phone number of the contact.

S103. Match the location related information with location information in an electronic map.

Optionally, in this embodiment of the present invention, if the current location information of the contact is obtained by using the location service, the current location information of the contact is matched with a geographical name in the electronic map, and a city name of the geographical name in the electronic map is determined; or
if the location information of the contact is obtained by extracting the correspondence address of the contact in the phone book, the city name in the correspondence address is matched with the city name in the electronic map; or
if the home location information of the contact is obtained by analyzing the phone number of the contact, the home location information of the contact is matched with the city name in the electronic map.

S105. If the matching succeeds, add contact information of the contact to the location in the electronic map, and generate a map phone book that includes the contact information of the contact.

Optionally, in this embodiment of the present invention, when the location information of the contact can match a corresponding geographical name, for example, a city name in the electronic map, the contact information of the contact is added to the geographical name in the electronic map; when the matching between the location information of all contacts in the phone book and the electronic map is completed, a map phone book that includes the contact information of all contacts in the phone book is generated, where the contact information of a contact may include phone number, Email address, or portrait of the contact.

Optionally, in this embodiment of the present invention, after the map phone book is generated, the generated map phone book may display phone book records of all contacts in the form of an electronic map according to a need of a user. For example, if a user needs to display all contacts of a location in the electronic map, the user needs to select only a related location in the electronic map; if the user needs to further query for the contact information of a contact, the user needs to select only the contact. The areas covered by the map can be selected, and displayed contents vary in areas of different dimensions. For example, when there are a lot of contacts in this area, only data statistics information is displayed; when there are only several events or contacts, abstract of the events or photo stickers of the contacts may be displayed.

The mobile terminal provided in this embodiment of the present invention may be a small mobile terminal electronic device such as a handset, a personal digital assistant (PDA), or a portable computer.

The following describes this embodiment of the present invention by using the handset as an example.

In this embodiment of the present invention, the handset's applications include an electronic map. The method for generating a map phone book includes: Firstly, related location information of a contact needs to be obtained. Generally, the phone book of the handset includes such information as correspondence address and phone number of the contact; when the location information of the contact needs to be obtained, corresponding geographical information may be extracted from the correspondence address of the contact, for example, a city name or a specific geographic name, or the home location information may be obtained by analyzing the phone number of the contact, for example, all mobile phone numbers whose home location is Shenzhen. For some handsets that support location services, the real-time location of the contact may be obtained from a server that provides location services by using the location services. Secondly, after the location information of the contact in the handset is obtained, a corresponding location in the electronic map may be found by using the obtained location as a key word. If a contact corresponding to the geographical name or a specific location can be found in the electronic map, the name of the contact may be marked in the electronic map. Meanwhile, other contact information is added to the contact records of the phone book. If only contact records of the city name or the home location are available, the statistics information of the contact records may be marked in related city areas in the electronic map. For example, if there are 18 phone numbers whose home locations are Beijing in the phone book records, 18 is marked at the location of Beijing in the electronic map; if specific geographical names or locations of the contacts in the 18 contact records can be further determined by using the location service or correspondence address information, related contact information of the contacts, such as names, phone numbers of the contacts, or portraits of the contacts may be added to the locations in the electronic map. Thirdly, the generated map phone book is displayed. When a user needs to query for contact information of a location in the map phone book, the user can click a specific geographical name at the location in the electronic map, and then the contact information that matches the geographical name is displayed at the geographical name in the electronic map.

In this embodiment of the present invention, location related information of a contact is obtained and matched with location information in an electronic map; and a map phone book is generated. In this way, contact information can be visually embodied in the form of a map, which makes it convenient for a user to query for contact information in the form of a map.

As shown in FIG. 2, an embodiment of the present invention provides a mobile terminal including a map phone book. The terminal includes an electronic map 4 and further includes: a location information obtaining unit 1, configured to obtain location related information of a contact; a location matching unit 2, configured to match the location related information with location information in the electronic map; and a map phone book generating unit 3, configured to add matched contact information of the contact to the location in the electronic map, and generate a map phone book that includes the contact information of the contact.

Optionally, in this embodiment of the present invention, the location information obtaining unit 1 may include: a locating module, configured to obtain current location information of a contact by using a location service; or an extracting module, configured to extract the correspondence address of a contact in the phone book to obtain location information of the contact; or an analyzing module, configured to analyze the phone number of a contact to obtain home location information of the contact.

Optionally, in this embodiment of the present invention, the location matching unit 2 may include: a current location information matching module, configured to match current location information of a contact with a geographical name in the electronic map, and determine a city name of the geographical name in the electronic map; or a correspondence address information matching module, configured to match a city name in a correspondence address with a city name in the electronic map; or a home location information matching module, configured to match home location information of a contact with a city name in the electronic map.

Optionally, in this embodiment of the present invention, the mobile terminal may further include a displaying unit configured to display a map phone book that includes contact information of contacts.

The mobile terminal in this embodiment of the present invention may be a small mobile terminal electronic device such as a handset, a PDA, and a portable music player. Using the handset as an example, the location information obtaining unit 1, the location matching unit 2, and the map phone book generating unit 3 may be implemented by adding a corresponding software module/unit in the central processor of the mobile terminal. For example, the location information obtaining unit 1 is added to the central processor to extract location information of a contact from the correspondence address of the contact in the mobile phone book, and send the extracted location information to the location matching unit 2 added in the central processor; the location matching unit 2 matches the extracted location information of the contact by querying the electronic map 4; if the location matching unit 2 finds corresponding location information in the electronic map, the matching succeeds; after the matching succeeds, the map phone book generating unit 3 adds the extracted contact information in the contact phone book, for example, name and phone number of the contact, to a corresponding location in the electronic map 4. When a user needs to query for contact information of a location in the electronic map, the contact information of the location may be displayed through the display screen of the handset.

In this embodiment of the present invention, location related information of a contact is obtained and matched with location information in an electronic map; and a map phone book is generated. In this way, contact information can be visually embodied in the form of a map, which makes it convenient for a user to query for contact information in the form of a map.

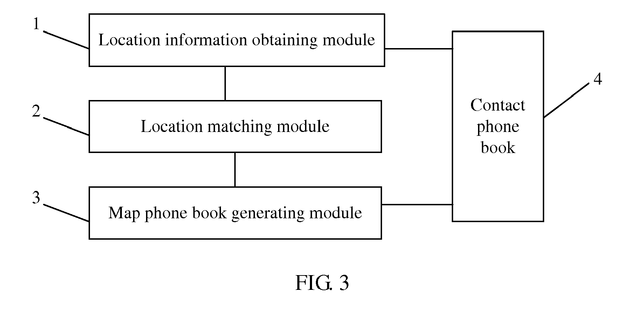

As shown in FIG. 3, an embodiment of the present invention provides an electronic map, including a contact phone book 4 and further including: a location information obtaining module 1, configured to obtain location related information of a contact from a contact record of the contact phone book; a location matching module 2, configured to match the location related information with location information in the electronic map; and a map phone book module 3, configured to add the contact information in the matched contact record of the contact phone book to the location in the electronic map.

In this embodiment of the present invention, the contact phone book 4 is added to the electronic map; according to all contact records in the contact phone book 4, the location information obtaining module 1 extracts correspondence address information or analyzes the home location of the phone number of a contact to obtain related location information of the contact; the location matching module 2 matches the location information with a geographical name in the electronic map; after the matching succeeds, the map phone book module 3 adds contact information of the contact record to a corresponding location in the electronic map.

By using the electronic map provided in this embodiment of the present invention, location related information of a contact is obtained and matched with location information in the electronic map; and a map phone book is generated. In this way, contact information can be visually embodied in the form of a map, which makes it convenient for a user to query for contact information in the form of a map.

A person of ordinary skill in the art should understand that all or a part of the steps of the methods in the embodiments may be implemented by a program instructing relevant hardware. The program may be stored in a computer readable storage medium, such as a ROM/RAM, a magnetic disk, or an optical disk.

The above are merely specific implementation modes of the present invention. However, the protection scope of the present invention is not limited thereto. Changes or replacements readily apparent to a person skilled in the prior art within the technical scope disclosed by the present invention should fall within the protection scope of the present invention. Therefore, the protection scope of the present invention is subject to the protection scope of the claims.

## Claims

1. A method for generating a map phone book, comprising:
obtaining location related information of a contact;
matching the location related information with location information in an electronic map; and
if the matching succeeds, adding contact information of the contact to the location in the electronic map, and generating a map phone book that comprises the contact information of the contact.

2. The method according to claim 1, wherein the obtaining location related information of a contact further comprises:
obtaining current location information of the contact by using a location service; or
obtaining the location information of the contact by extracting a correspondence address of the contact in a phone book; or
obtaining home location information of the contact by analyzing a phone number of the contact.

3. The method according to claim 2, wherein the matching the location related information with location information in an electronic map further comprises:
if the current location information of the contact is obtained by using the location service, matching the current location information of the contact with a geographical name in the electronic map, and determining a city name of the geographical name in the electronic map; or
if the location information of the contact is obtained by extracting the correspondence address of the contact in the phone book, matching a city name in the correspondence address with the city name in the electronic map; or
if the home location information of the contact is obtained by analyzing the phone number of the contact, matching the home location information of the contact with a city name in the electronic map.

4. The method according to claim 1, wherein the contact information of the contact comprises:
a name of the contact, a phone number of the contact, an Email address, or a portrait of the contact.

5. The method according to claim 1, 2, 3, or 4, further comprising: displaying the map phone book comprising the contact information of the contact.

6. A mobile terminal comprising a map phone book, comprising an electronic map, and further comprising:
a location information obtaining unit, configured to obtain location related information of a contact;
a location matching unit, configured to match the location related information with location information in the electronic map; and
a map phone book generating unit, configured to add contact information of the matched contact to the location in the electronic map, and generate a map phone book that comprises the contact information of the contact.

7. The mobile terminal according to claim 6, wherein the location information obtaining unit comprises:
a locating module, configured to obtain current location information of the contact by using a location service; or
an extracting module, configured to extract a correspondence address of the contact in the phone book to obtain location information of the contact; or
an analyzing module, configured to analyze a phone number of the contact to obtain home location information of the contact.

8. The mobile terminal according to claim 6, wherein the location matching unit comprises:
a current location information matching module, configured to match current location information of the contact with a geographical name in the electronic map, and determine a city name of the geographical name in the electronic map; or
a correspondence address information matching module, configured to match a city name in a correspondence address with the city name in the electronic map; or
a home location information matching module, configured to match home location information of the contact with the city name in the electronic map.

9. The mobile terminal according to claim 6, 7, or 8, further comprising:
a displaying unit, configured to display the map phone book that comprises the contact information of the contact.

10. The mobile terminal according to claim 9, wherein the contact information of the contact comprises: a name of the contact, a phone number of the contact, an Email address, or a portrait of the contact.

11. An electronic map, comprising a contact phone book and further comprising:
a location information obtaining module, configured to obtain location related information of a contact from a contact record of the contact phone book;
a location matching module, configured to match the location related information with location information in the electronic map; and
a map phone book module, configured to add contact information in the matched contact record of the contact phone book to the location in the electronic map.

12. The electronic map according to claim 11, wherein the contact information in the contact record comprises: a name of the contact, a phone number of the contact, an Email address, a or portrait of the contact.
